# EUROPÄISCHE PATENTSCHRIFT

(11) **EP 1 686 361 B1**
(45) Veröffentlichungstag und Bekanntmachung des Hinweises auf die Patenterteilung: **28.10.2009**
(21) Anmeldenummer: 05027567.6
(22) Anmeldetag: 16.12.2005
(51) Int. Cl.: G01L 3/10

(54) **Vorrichtung zum berührungslosen Sensieren von Antriebsparametern**
Device for the contactless sensing of drive parameters
Dispositif destiné à la détection sans contact de paramètres d'entraînement

(30) Priorität: 29.01.2005 DE 102005004209
(43) Veröffentlichungstag der Anmeldung: 02.08.2006
(73) Patentinhaber: AUDI AG, 85045 Ingolstadt (DE)
(72) Erfinder: Märkl, Johann, 85128 Nassenfels (DE)
(74) Vertreter: Lehle, Josef

(56) Entgegenhaltungen:
- WO-A1-02/23146
- CH-A- 423 300
- DE-A1- 3 820 433

## Beschreibung

Die Erfindung betrifft eine Vorrichtung zum berührungslosen Sensieren von Antriebsparametern an einer Welle eines Kraftfahrzeugs, insbesondere an einer Eingangswelle von Geschwindigkeits-Wechselgetrieben, gemäß dem Oberbegriff des Patentanspruches 1.

Eine derartige Vorrichtung ist z. B. durch die DE 38 20 433 C2 bekannt. Dabei ragen zwei Drehmomentsensoren in eine axial kurze, ein Eingangselement und ein Ausgangselement tragende Vorgelegehohlwelle eines Geschwindigkeits-Wechselgetriebes für Kraftfahrzeuge ein. Der Vorteil dieser Anordnung der Drehmomentsensoren liegt darin, dass die Sensierung innerhalb der Hohlwelle erfolgt und somit keinen zusätzlichen Bauraum, insbesondere in axialer Richtung, erfordert. An der Innenseite der Hohlwelle sind jedoch nur aufwendig herzustellende Stegstrukturen für eine Drehmomenterfassung erforderlich.

Aus der WO 02/23146 A1 ist ebenfalls eine Vorrichtung zum berührungslosen Sensieren von Antriebsparametern an einer Welle eines Kraftfahrzeuges bekannt. Die Welle weist eine axiale Bohrung auf, in der eine Sensorspule zur Auswertung eines veränderlichen Magnetfeldes angeordnet ist. Die drehbare Welle weist einen magnetisierten Bereich in der Funktion eines Dauermagneten auf, der mit der ortsfesten Sensorspule zur Sensierung der Antriebsparameter zusammenwirkt.

Aufgabe der Erfindung ist es, die Vorrichtung der gattungsgemäßen Art derart weiterzubilden, dass sie bei fertigungstechnisch günstiger Auslegung für eine Auswertung von Antriebsparametern, insbesondere zur Drehmomenterfassung geeignet ist.

Die Aufgabe ist durch die Merkmale des Patentanspruches 1 gelöst. Bevorzugte Weiterbildungen der Erfindung sind in den Unteransprüchen offenbart.

Erfindungsgemäß weist im Bereich der Sensorspule die drehbare Welle einen magnetisierten Bereich in der Funktion eines Dauermagneten auf, der mit der ortsfesten Sensorspule zur Sensierung der Antriebsparameter zusammenwirkt, wobei in einer besonders vorteilhaften Weiterbildung nach Anspruch 2 ein relativ dünnwandiger magnetisierter Bereich an der Innenwandseite der Welle hergestellt ist.

Unter dem Begriff Sensorspule werden alle bekannten, ein Magnetfeld und/oder dessen Änderung erfassenden und messtechnisch verwertbaren Sensoren, wie beispielsweise auch Hallsensoren verstanden.

Bei der Vorbeibewegung eines oder ggf. mehrerer magnetisierter Bereiche der drehenden Welle an einer ortsfesten Sensorspule wird ein periodisches Messsignal erzeugt, das einfach zur Drehzahlermittlung und/oder Drehrichtungserkennung auswertbar ist. Das in die Welle eingeleitete Drehmoment führt zu einer geringen Verwindung der Welle, wodurch der/oder die magnetisierten Bereiche der Welle gegenüber der Sensorspule im Vergleich zu einer unbelasteten Welle in Abhängigkeit der Größe des Drehmoments verlagert werden.

Dies kann entsprechend über eine Phasenverschiebung des Messsignals oder durch Vergleich der Messsignale an zwei an der Welle versetzt angeordnete

Magnetisierungen mit zugeordneten Sensorspulen zur Messung des Drehmoments ausgewertet werden.

Weiter wird für eine günstige Drehmomenterfassung vorgeschlagen, dass sich der Sensorstab in der Bohrung bis wenigstens vor die zu sensierenden Abtriebselemente hindurch erstreckt. Zur exakten Positionierung der Sensorspule mit definiertem Spalt zur Bohrung in der Eingangswelle kann zumindest ein Lager zur Abstützung des Sensorstabes benachbart der Sensorspule angeordnet. Alternativ dazu kann das Lager zur Abstützung des Sensorstabes auch unmittelbar an einem Abschnitt der Sensorspule ausgebildet sein.

Des weiteren kann der Sensorstab eine Schmieröl innerhalb der Bohrung zur Drehmomenteingangsseite fördernde Schnecke aufweisen und somit zusätzlich eine verbesserte Schmierung der Getriebeelemente sicherstellen.

Gegebenenfalls kann ferner der magnetisierte Bereich der Eingangswelle zumindest im wesentlichen radial innerhalb einer dann vorzugsweise gedichteten Wälzlagerung der Eingangswelle im Getriebegehäuse positioniert sein; damit ist u.a. eine dünnwandige Gestaltung des besagten magnetisierten Bereiches der Eingangswelle gegeben, ohne deren Biegesteifigkeit wesentlich zu beeinträchtigen.

Ggf. können die Sensorspule und/oder das abstützende Lager mit Schmieröl durchlassenden Ausnehmungen versehen sein, so dass in einfacher Weise auch hinterhalb der Sensorspule liegende Bereich der Bohrung in der Eingangswelle mit Schmieröl versorgbar sind.

Schließlich kann besonders montagegünstig die zumindest eine Sensorspule durch den rohrförmigen Sensorstab hindurch mit einem Stecker verkabelt bzw. zu einer Montageeinheit verbunden sein, wobei der Stecker mit Anschlussverbindungen am Getriebegehäuse montierbar ist.

Ein Ausführungsbeispiel der Erfindung ist im folgenden mit weiteren Einzelheiten näher erläutert.

Die schematische Zeichnung zeigt einen Längsschnitt durch ein teilweise dargestelltes Geschwindigkeits-Wechselgetriebe für Kraftfahrzeuge, mit einer Eingangswelle, mehreren Abtriebselementen und einer Vorrichtung zum Sensieren des in die Eingangswelle eingeleiteten Drehmomentes.

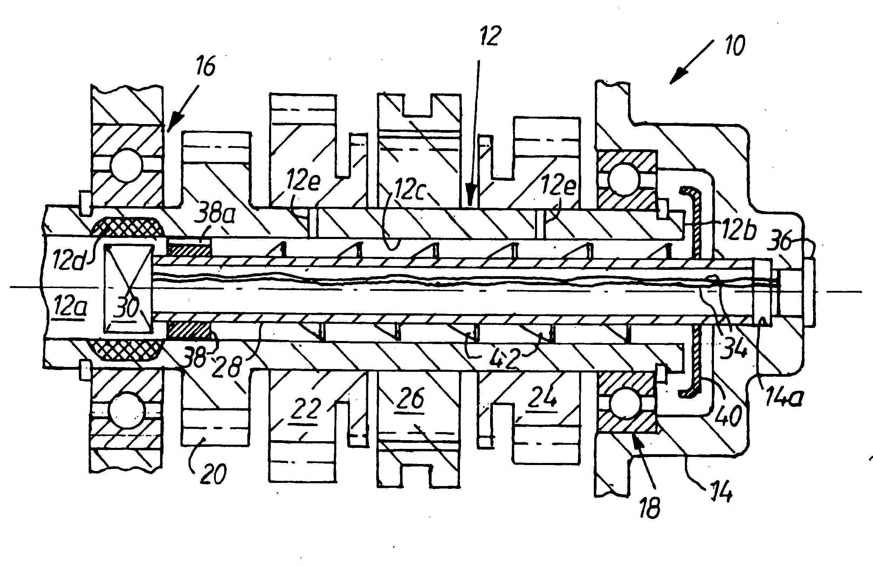

In der Zeichnung ist mit 10 ein nur teilweise dargestelltes Geschwindigkeits-Wechselgetriebe für Kraftfahrzeuge bezeichnet, mit einer Eingangswelle 12, die in einem nur angedeuteten Getriebegehäuse 14 über Wälzlager 16, 18 drehbar gelagert ist. Die Eingangswelle 12 ist Funktionsteil eines automatisierten Schaltgetriebes; das Wechselgetriebe kann aber auch beispielsweise ein automatisches Getriebe mit Planetenradsätzen oder ein stufenloses Getriebe sein.

Die Eingangswelle 12 trägt mehrere Abtriebselemente in Form eines einstückig mit der Eingangswelle 12 ausgeführten Zahnrades 20 und zwei Schaltzahnrädern 22, 24, die mittels einer Synchronkupplung 26 in üblicher Weise mit der Eingangswelle 12 kuppelbar sind. Es können auch weitere Abtriebselemente vorgesehen sein.

Das Eingangsdrehmoment des Wechselgetriebes 10 wird in nicht dargestellter Weise über eine Anfahrkupplung auf die Eingangswelle 12 auf der Zeichnung links bei 12a eingeleitet und je nach geschalteter Übersetzung auf die Abtriebselemente bzw. Zahnräder 20, 22, 24 übertragen. Die besagten Zahnräder 20, 22, 24 kämmen mit nicht dargestellten Zahnrädern auf einer Abtriebswelle des Wechselgetriebes 10.

In der Eingangswelle 12 ist von der der Eingangsdrehmomentseite 12a gegenüber liegenden Stirnseite 12b eine Bohrung 12c eingebracht, in die ein rohrförmiger Sensorstab 28 einragt, an dessen Ende eine Sensorspule 30 angeordnet ist. Der Sensorstab 28 ist in dem Gehäuse 14 des Wechselgetriebes 10 befestigt, z.B. in eine stirnseitige Bohrung 14a eingepresst oder wird von außen durch eine Bohrung im Gehäuse 14 geschoben und an diesem befestigt.

Die Sensorspule 30 wirkt zur Sensierung des auf die Eingangswelle 12 wirkenden Drehmomentes mit einem (oder mehreren) magnetisierten Bereich 12d (kreuzschraffiert dargestellt) an einem relativ dünnwandigem Bereich der Eingangswelle 12 zusammen, wobei der Bereich 12d wie ersichtlich in einer einheitlichen Rotationsebene mit dem Kugellager 16 positionierbar ist.

Die Sensorspule 30 ist über elektrische Leitungen 34 an eine nicht dargestellte Auswerteschaltung angeschlossen, wobei die Leitungen 34 in einen Stecker 36 münden, der im Gehäuse 14 des Wechselgetriebes dicht gehalten ist und außen liegende Anschlussverbindungen zur einfachen Steckkontaktverbindung mit einem Anschlussstecker aufweist oder der mit einer getriebeinternen Mechatronikeinheit verbunden ist.

Zur Abstützung des relativ langen Sensorstabes 28 innerhalb der Bohrung 12c ist an dem Sensorstab 28 ein hülsenförmigen Lager 38 fest angeordnet, das in der Bohrung 12c geführt ist und die Sensorspule 30 in einer definierten Lage zu dem magnetisierten Bereich 12d abstützt.

Der Sensorstab 28 trägt der Stirnseite 12b der Eingangswelle 12 benachbart ein Zuführelement 40 und an seinem Außenumfang eine spiralförmige Wendel 42, die über das Zuführelement 40 eingeleitetes Schmieröl des Wechselgetriebes 10 auf der Zeichnung nach links der Sensorspule 30 zu fördert.

Dabei sind in an sich bekannter Weise zur Schmierung der auf der Eingangswelle 12 drehbar gelagerten Schaltzahnräder 22, 24 und ggf. weiterer Schmierstellen von der Bohrung 12c ausgehende Querkanäle 12e vorgesehen, in die aufgrund der Zentrifugalwirkung Schmieröl abgeführt wird.

Ferner sind in dem Lager 38 an dessen Außenumfang Schmieröl durchlassende Ausnehmungen 38a eingearbeitet, über die Schmieröl auch zu den von der Zuführseite her gesehen hinter der Sensorspule 30 liegenden Schmierstellen (nicht dargestellt) gelangen kann. Ggf. könnten auch in der Sensorspule 30 entsprechende Ausnehmungen vorgesehen sein.

Die Erfindung ist nicht auf das dargestellte Ausführungsbeispiel beschränkt. So kann das abstützende Lager 38 für den Sensorstab 28 auch unmittelbar an einem angeformten Abschnitt der Sensorspule 30 ausgeführt sein. Über die Sensorspule 30 und/oder weitere Sensorspulen können ggf. auch Drehzahlsignale und deren Ableitungen in messtechnisch bekannter Weise sensiert werden.

## Patentansprüche

1. Vorrichtung zum berührungslosen Sensieren von Antriebsparametern, mit einer in einem Gehäuse (14) angeordneten Welle (12) eines Kraftfahrzeugs, insbesondere einer Eingangswelle eines Geschwindigkeits-Wechselgetriebes (10), mit zumindest einer in eine axiale Bohrung (12c) der Welle (12) zwischen einem Drehmoment-Eingangselement der Welle (12) und einem Abtriebselement der Welle (12) einragenden, an einem gehäusefesten Sensorstab (28) angeordneten Sensorspule (30) zur Auswertung eines von den Antriebsparametern abhängigen, veränderlichen Magnetfeldes, **dadurch gekennzeichnet, dass** im Bereich der Sensorspule (30) die drehbare Welle (12) einen magnetisierten Bereich (12d) in der Funktion eines Dauermagneten aufweist, der mit der ortsfesten Sensorspule (30) zur Sensierung der Antriebsparameter zusammenwirkt, und die Bohrung (12c) in der Welle (12) zugleich als Ölzuführbohrung für Abtriebs- und/oder Wälzlagerelemente auf der Welle (12) dient.

2. Vorrichtung nach Anspruch 1, **dadurch gekennzeichnet, dass** der magnetisierte Bereich an der Innenwandseite eines Wellenabschnitts (12) hergestellt ist.

3. Vorrichtung nach Anspruch 1 oder 2, **dadurch gekennzeichnet, dass** die Welle als Eingangswelle (12) wenigstens ein Antriebselement (20, 22, 24) trägt, dass sich der Sensorstab (28) in der Bohrung (12c) bis wenigstens vor die zu sensierenden Abtriebselemente hindurch erstreckt und dass der Sensorstab (28) in der Bohrung (12c) über zumindest ein benachbart der Sensorspule (30) angeordnetes Lager (38) abgestützt ist.

4. Vorrichtung nach Anspruch 1 oder 2, **dadurch gekennzeichnet, dass** ein Lager (38) zur Abstützung des Sensorstabes (28) unmittelbar an einem Abschnitt der Sensorspule (30) ausgebildet ist.

5. Vorrichtung nach einem der Ansprüche 1 bis 4, **dadurch gekennzeichnet, dass** der Sensorstab (28) mit einem der Drehmomenteingangsseite (12a) der Eingangswelle (12) gegenüberliegenden Zuführelement (40) für Schmieröl verbunden ist.

6. Vorrichtung nach einem der Ansprüche 1 bis 5, **dadurch gekennzeichnet, dass** der Sensorstab (28) eine Schmieröl innerhalb der Bohrung (12c) zur Drehmomenteingangsseite (12a) fördernde Schnecke (42) aufweist.

7. Vorrichtung nach einem der vorhergehenden Ansprüche, **dadurch gekennzeichnet, dass** der magnetisierte Bereich (12d) der Welle (12) zumindest im Wesentlichen radial innerhalb einer Wälzlagerung (16) der Welle (12) im Getriebegehäuse (14) positioniert ist.

8. Vorrichtung nach einem der vorhergehenden Ansprüche, **dadurch gekennzeichnet, dass** die Sensorspule (30) und/oder das abstützende Lager (38) mit Schmieröl durchlassenden Ausnehmungen (38a) versehen sind.

9. Vorrichtung nach einem der vorhergehenden Ansprüche, **dadurch gekennzeichnet, dass** die zumindest eine Sensorspule (30) durch den rohrförmigen Sensorstab (28) hindurch mit einem Stecker (36) verkabelt bzw. zu einer Montageeinheit verbunden ist.

## Claims

1. A device for the contactless sensing of drive parameters, with a shaft (12) of a motor vehicle arranged in a housing (14), in particular an input shaft of a speed change gear (10), with at least one sensor coil (30) projecting into an axial bore (12c) in the shaft (12) between a torque input element of the shaft (12) and a drive element of the shaft (12) and arranged on a sensor rod (28) secured to the housing, for evaluating a variable magnetic field dependent on the drive parameters, **characterised in that** in the region of the sensor coil (30) the rotary shaft (12) has a magnetised region (12d) acting as a permanent magnet which interacts with the fixed sensor coil (30) for sensing the drive parameters, and **in that** the bore (12) in the shaft (12) at the same time serves as an oil feed bore for drive and/or rolling bearing elements on the shaft (12).

2. The device according to Claim 1, **characterised in that** the magnetised region is produced on the inner wall side of one shaft section (12).

3. The device according to Claim 1 or 2, **characterised in that** the shaft, as an input shaft (12), supports at least one drive element (20, 22, 24), **in that** the sensor rod (28) in the bore (12c) at least as far as a point in front of the drive elements to be sensed, and **in that** the sensor rod (28) in the bore (12c) is extended over at least one bearing (38) arranged adjacent to the sensor coil (30).

4. The device according to Claim 1 or 2, **characterised in that** a bearing (38) for supporting the sensor rod (28) is formed directly on one section of the sensor coil (30).

5. The device according to any one of Claims 1 to 4, **characterised in that** the sensor rod (28) is connected to a feed element (40) for lubricating oil opposite the torque input side (12a) of the input shaft.

6. The device according to any one of Claims 1 to 5, **characterised in that** the sensor rod (28) has a screw (42) conveying lubricating oil inside the bore (12c) to the torque input side (12a).

7. The device according to any one of the preceding claims, **characterised in that** the magnetised region (12d) of the shaft (12) is positioned at least essentially radially inside a rolling bearing (16) of the shaft (12) in the gear housing (14).

8. The device according to any one of the preceding claims, **characterised in that** the sensor coil (30) and/or the supporting bearing (38) are provided with recesses (38a) admitting lubricating oil.

9. The device according to any one of the preceding claims, **characterised in that** the at least one sensor coil (30) is wired through the tubular sensor rod (28) to a plug (36) or is connected to an assembly unit.

## Revendications

1. Dispositif destiné à la détection sans contact de paramètres d'entraînement, avec un arbre (12) agencé dans un carter (14) d'un véhicule automobile, en particulier avec un arbre d'entrée d'une boîte de vitesses (10), avec au moins une bobine de détection (30) pénétrant dans un alésage axial (12c) de l'arbre (12) entre un élément d'entrée de couple de l'arbre (12) et un élément de sortie de l'arbre (12) et agencée au niveau d'une tige de détection (28) fixée au carter pour l'évaluation d'un champ magnétique variable, dépendant des paramètres d'entraînement, **caractérisé en ce que** dans la zone de la bobine de détection (30), l'arbre rotatif (12) présente une zone aimantée (12d) ayant la fonction d'un aimant permanent, qui coopère avec la bobine de détection (30) fixe pour la détection des paramètres d'entraînement, et **en ce que** l'alésage (12c) dans l'arbre (12) sert en même temps d'alésage d'amenée d'huile pour les éléments de sortie et/ou de roulement sur l'arbre (12).

2. Dispositif selon la revendication 1, **caractérisé en ce que** la zone aimantée est réalisée au niveau de la paroi intérieure d'une section d'arbre (12).

3. Dispositif selon la revendication 1 ou 2, **caractérisé en ce que** l'arbre porte en tant qu'arbre d'entrée (12) au moins un élément d'entraînement (20, 22, 24), **en ce que** la tige de détection (28) s'étend à travers l'alésage (12c) jusqu'au moins devant les éléments de sortie à détecter et **en ce que** la tige de détection (28) est supportée dans l'alésage (12c) par le biais d'au moins un palier (38) agencé de manière adjacente à la bobine de détection (30).

4. Dispositif selon la revendication 1 ou 2, **caractérisé en ce qu'**un palier (38) est réalisé pour supporter la tige de détection (28) directement au niveau d'une section de la bobine de détection (30).

5. Dispositif selon l'une quelconque des revendications 1 à 4, **caractérisé en ce que** la tige de détection (28) est reliée à un élément d'amenée (40) d'huile de graissage opposé au côté d'entrée de couple (12a) de l'arbre d'entrée (12).

6. Dispositif selon l'une quelconque des revendications 1 à 5, **caractérisé en ce que** la tige de détection (28) présente une vis sans fin (42) transportant de l'huile de graissage à l'intérieur de l'alésage (12c) vers le côté entrée de couple (12a).

7. Dispositif selon l'une quelconque des revendications précédentes, **caractérisé en ce que** la zone aimantée (12d) de l'arbre (12) est positionnée au moins de manière essentiellement radiale à l'intérieur d'un roulement (16) de l'arbre (12) dans le carter de la boîte de vitesses (14).

8. Dispositif selon l'une quelconque des revendications précédentes, **caractérisé en ce que** la bobine de détection (30) et/ou le palier support (38) sont dotés d'évidements (38a) laissant passer l'huile de graissage.

9. Dispositif selon l'une quelconque des revendications précédentes, **caractérisé en ce que** l'au moins une bobine de détection (30) est câblée à travers la tige de détection (28) tubulaire avec une fiche (36) et/ou est raccordée pour former une unité de montage.
